(19)

Europäisches
Patentamt
European
Patent Office
Office européen
des brevets

(11)  EP 2 337 431 A1

(12)  **EUROPEAN PATENT APPLICATION**

(43) Date of publication:
   **22.06.2011 Bulletin 2011/25**

(51) Int Cl.:
   *H05B 39/04* (2006.01)   *H05B 37/03* (2006.01)

(21) Application number: **10190685.7**

(22) Date of filing: **10.11.2010**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **20.11.2009 IT TO20090893**

(71) Applicants:
   • **Osram Gesellschaft mit Beschränkter Haftung
     81543 München (DE)**
   • **OSRAM S.P.A. - Societa' Riunite Osram
     Edison Clerici
     20126 Milano (IT)**
     Designated Contracting States:
     **IT**

(72) Inventors:
   • **Branchetti, Filippo
     31100 Treviso (IT)**
   • **Faccin, Marco
     31031 Caerano San Marco (Treviso) (IT)**
   • **Pellizzari, Giancarlo
     31023 Resana (Treviso) (IT)**

(74) Representative: **Bosotti, Luciano
   Buzzi, Notaro & Antonielli d'Oulx
   Via Maria Vittoria, 18
   10123 Torino (IT)**

(54) **A method of detecting anomalous operating conditions in power supply circuits for light sources**

(57)   An electrical circuit (10), for supplying power to at least one light source (L) having a filament with a light intensity level selectively variable in a range between a minimum value and a maximum value, is protected from anomalous operating conditions by detecting (S4, S1) the output power of said power supply circuit (10) reaching an upper threshold value and, upon said threshold value being reached, by controlling the circuit in a burst mode including an alternate sequence of active intervals, where the circuit (10) operates to energize said at least one light source (L), and of passive intervals. The duration of active intervals is varied in a manner complementary to the desired light intensity level, so that said active intervals have a minimum duration value when the desired light intensity level is at a maximum and a maximum duration value when the desired light intensity level is at a minimum.

FIG. 1

## Description

Field of the invention

This disclosure relates to control circuits for light sources.

This disclosure was devised with specific attention paid to its possible application in Electronic Control Gear (ECG) for light sources having a filament, such as halogen lamps.

Description of the related art

In electronic transformers for halogen lamps wherein there is provided a control of light intensity (so called "dimming" function, which is achievable in different ways, e.g. as a function of an analogue control signal having e.g. a value which can be varied in a range from 1 to 10 volt, or else by resorting to the control protocol known as DALI, an acronym for Digital Addressable Lighting Interface), it is essential to be able to recognise anomalous operating conditions such as short circuits. This must be achieved on the whole range of possible control of the dimming function (for example in the value range 1-254 in the DALI protocol).

In the presence of the DALI protocol, this need is felt because a feedback is provided from the ballast in the case of an anomalous condition. The same need is however also felt on a general level, in order to enable the device to be protected from overcurrents and overheating, normally occurring in such a situation.

In this respect various problems arise.

A first problem is the recognition of an anomalous condition linked to internal overcurrent monitoring. Such a function may be performed by shunt resistors or similar devices. For example, one may resort to dissipative systems, such as resistors connected in series to internal power components of the ballast (e.g. power transistors and/or decoupling capacitors), so as to detect the current flowing through them and to recognise the anomalous condition.

However, this solution has the drawback of an excessive power dissipation, which is particularly evident if the control circuit must operate on medium-high power levels (for example higher than 100 Watt).

Another problem is to be ascribed to a situation which may take place when the light source is a halogen lamp or, in general, a light source having a filament. In this case it may be difficult to distinguish a short circuit or an overload applied to the output (which is an anomalous condition) from a normal operating condition at low impedance, which may be due to the lamp being subjected to a high dimming of light intensity; by operating only at a very low percentage (e.g. lower than 10%) of its full light intensity capacity, the temperature of the filament is much lower than at rated conditions, and therefore has an equivalent resistance which is comparable to a short circuit.

Still another problem arises in the case of anomalous conditions due to the load or ballast operating in a burst mode, featuring an alternation of an active interval, Ton, during which it is attempted to light the lamp(s), and a pause interval, Toff. This can be true especially if the anomalous condition has not been eliminated.

In order to distinguish a condition wherein the filament is cold, e.g. because the lamp has just been lit or has been working at a low level of light intensity, from a real short circuit, the ballast must attempt to light the lamp(s) for a time interval Ton which is sufficiently long as to heat the filament, so as to be able to recognise if the anomalous condition has been eliminated (or has never occurred) or if it is still present. In the case of an anomalous condition, the ballast can therefore operate in a burst mode, characterized by a fixed Ton interval, during which the ballast tries to light the lamp(s), and an interval Toff sufficiently long as to allow the internal active elements to cool down.

On the other hand, an extended Ton interval corresponds to a rather high heat and current stress on the internal power components of the ballast, particularly when high lighting levels are required which approach the maximum rated value. In this case, in order to withstand such stress for an extended time interval, the power components need to be oversized as compared to the size which would suffice to ensure normal operation. As previously stated, the Ton interval must be sufficiently long as to heat the cold lamp when a reduced light intensity is needed (for example DALI lower than 100). A value of a few seconds allows to recognise if the short circuit or the overload have been eliminated. Nevertheless, if the Ton interval is determined according to this criterion, in the presence of higher light intensity levels (for example DALI higher than 200) the internal active components and/or the dissipative system must be oversized in order to enable them to accept extra currents (with values up to tenfold the rated value) for such an extended time interval.

Object and summary of the invention

The object of the invention is to overcome the previously described drawbacks.

According to the invention, such an object is achieved through a method having the features set forth in the claims that follow. The invention also concerns a related device as well as a computer program product, loadable in the memory of a computer (for example a microcontroller) and comprising software code parts adapted to perform the method steps when the product is run on a computer. As used herein, the phrase "computer program product" is intended to refer also to a computer-readable medium, containing instructions for controlling the processing system, in order to coordinate the implementation of the inventive method.

The claims are an integral part of the technical teaching of the invention provided herein.

Brief description of the annexed views

The invention will now be described, by way of example only, with reference to the enclosed views, wherein:

- Figure 1 is a flow chart of an embodiment, and
- Figure 2 is a flow chart detailing some aspects of an embodiment.

Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

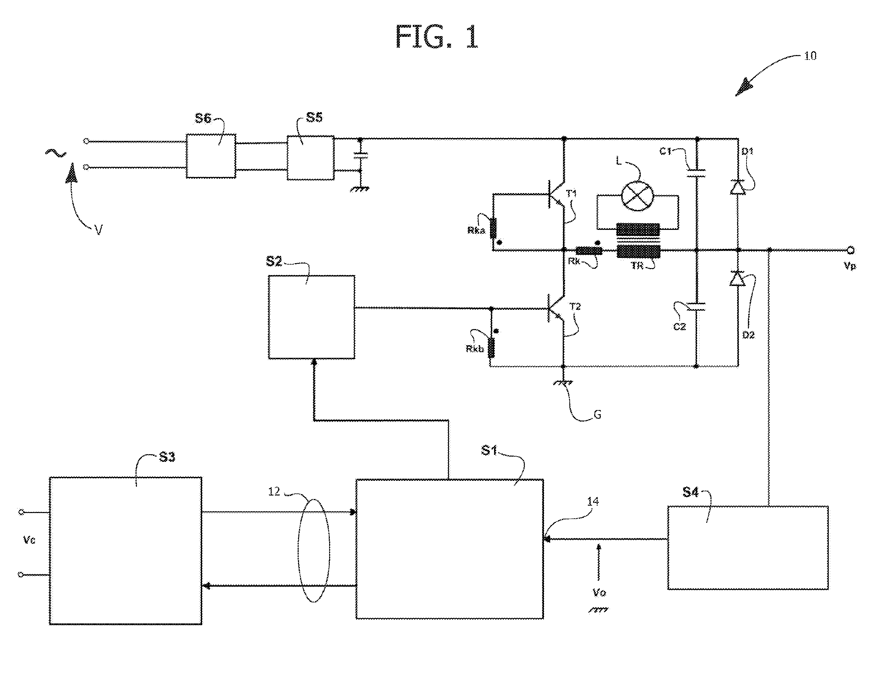

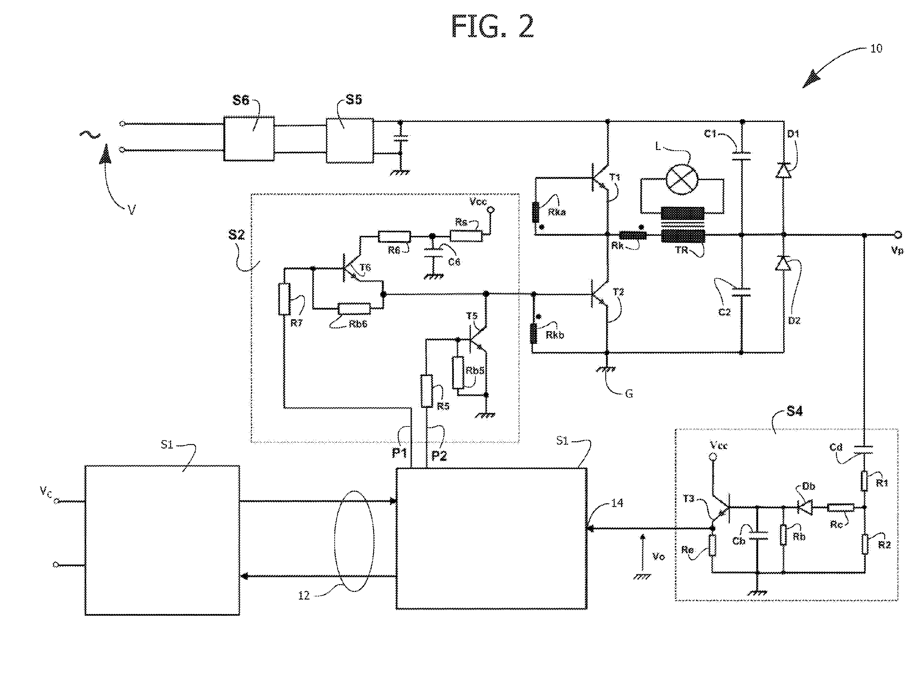

In Figures 1 and 2, reference 10 denotes as a whole an electronic circuit forming a so called electronic control gear (ECG) used to feed a load L comprising one or several lighting sources i having a filament, such as one ore several halogen lamps.

Load L (which in itself does not form part of the presently considered device and is however present in the Figures for the sake of clarity) is fed via the secondary winding of a transformer TR. The primary winding of transformer TR is fed from a mains voltage V, that flows through a line filter S6 and a rectifier S5 to reach the primary winding of transformer TR through a pair of electronic switches such as two bipolar power transistors T1 and T2. Both switches T1 and T2 are alternatively turned on (to a conducting state) o turned off (to a non conducting state), in an alternate sequence. This takes place on the basis of a drive signal coming from a start/stop module S2, that also performs the dimming function (light intensity variation) by varying the duty cycle for driving the transistors T1 and T2 according a modulation law of the PWM type, on the basis of the signal (s) that, as will be better understood in the following, drive(s) the start/stop circuit S2 as a function of the desired dimming level.

The two transistors T1 and T2 have a cascade arrangement, i.e. their respective emitter-collector lines are connected in series with each other between the output of rectifier S5 and ground G. References Rka and Rkb denote the biasing resistors associated with transistors T1 and T2.

The primary winding of transformer TR is connected to the intermediate point between transistors T1 and T2 (T1 emitters and T2 collectors) via a resistor Rk. The drive signal of on/off switching (with a duty cycle which selectively varies as a function of the desired dimming level) from start/stop module S2 is applied to the base of transistor T2.

The primary winding of transformer TR is moreover connected, at the opposite end with respect to the end connected to transistors T1 and T2, to a bridge rectifying unit comprising two diodes D1 and D2 associated to the respective capacitors C1 and C2. Specifically, the parallel connection of diode D1 and capacitor C1 is electrically connected between the output of rectifier S5 and the primary winding of transformer TR, while the parallel connection of diode D2 and capacitor C2 is interposed between the primary winding of transformer TR and ground G. On the primary winding of transformer TR it is therefore possible to detect a voltage level Vp, thanks to the rectifying and leveling action performed by diodes D1, D2 and by decoupling capacitors C1, C2. As will be more clearly explained in the following, signal Vp (specifically its ripple component) is representative of the circuit load conditions, i.e. essentially of the load to which the secondary winding of transformator TR is subjected.

The above described circuit corresponds, in its essential features, to a currently employed solution which allows an economical implementation of an electronic transformer for lamps having a filament, such as halogen lamps, in the form of a self-oscillating half-bridge comprising two power transformers which are controlled by a current transformer.

Those skilled in the art will appreciate that the circuit arrangement shown in Figures 1 and 2 represents one among many possible embodiments of the described function. Alternative modifications and solutions may comprise for example (and without limitation) the use of electronic switches different from bipolar transistors T1 and T2, a different structure of the related biasing and drive circuits, different ways of obtaining the mains voltage V, different ways of detecting a signal which identifies the circuit load conditions. Alternative modifications and solutions are well known in the art, and are adapted to be comprised within the present disclosure, although they are not explicitly stated herein.

Referring to the present disclosure, it is worthwhile emphasizing that it is an electrical circuit that feeds at least one light source having a filament with a desired light intensity, selectively variable in a range comprised between a minimum and a maximum value of light intensity, with the ability to detect (e.g. through signal Vp) if the output power of the supply circuit reaches an upper threshold value.

The start/stop module S2 operates under the control of a microcontroller S1, which receives on a line denoted on the whole with reference 12 a control signal which can identify the desired dimming level for light source L. This takes place via a control interface S3 to which a regulating signal Vc is applied through well known criteria. Line 12 is shown as a bidirectional line, taking into account the fact that controller S1 may supply interface S3, i.e. an external controller (not shown), with a possible indication of the state of the ballast.

As previously stated, block S4 detects ("senses") voltage Vp at an intermediate location between both decoupling capacitors C1, C2, and supplies an output voltage Vo which is essentially a direct voltage, adapted to be read by microcontroller S1, which receives it at an input denoted by 14.

The input voltage to S4, i.e. the voltage denoted by Vp detected at the intermediate location between both decoupling capacitors C1, C2, comprises a direct component, i.e. a component with a low variation frequency, with an overlaying ripple at a higher frequency, the width of which depends on the output power. The output voltage Vo of module S4 is proportional to such a width, so that the direct signal read by microcontroller S1 depends directly on the output power supplied by the ballast.

Microcontroller S1 is therefore adapted to recognize in a non dissipative mode the condition of the output load, and to detect (in a known way) the moment when the output power, "sensed" through signal Vo, reaches a threshold limit value. Microcontroller S1 can then take action through block S2, in such a way as to operate the circuit in the previously described burst mode (Ton, Toff).

Because the output power depends on the applied load, but also on the desired light intensity, microcontroller S1 is adapted to detect (and to keep by storing) the relation between voltage Vo and the control signal Vc supplied to the input of interface S3 over its whole variation range, when the maximum allowable load is applied to the output. This set of values identifies the limit of voltage Vo beyond which an anomalous condition exists and must be acknowledged, and the internal protection must be activated.

In addition, block S1 can be configured (e.g. via software) so as to implement a specific function, which is activated when an anomalous condition is spotted and the ballast starts operating in the burst mode.

Such a function dynamically correlates the duration of active interval Ton with the width of the needed light intensity level.

If Vc represents the control signal, the relationship can be expressed by:

$$\mathrm{Ton}(Vc) = \mathrm{Ton}_{max} - F(Vc)$$

where:

- Ton is the duration of said active intervals, which has been made variable,
- $\mathrm{Ton}_{max}$ is the maximum duration value of said active intervals,
- Vc is a signal representative of said desired light intensity level, and
- F(Vc) is a positive function having a zero value when said desired light intensity value is at minimum level.

In this way, the active interval Ton has maximum duration when the light intensity level is the minimum required, and can be sufficiently long as to heat the filament of the lamp(s) L, so as to allow distinguishing between an operation with "cold" lamp and a real short circuit.

Function F(Vc) can be performed in such a way that at maximum desired light intensity (for example when Vc is at maximum value) the interval Ton is sufficiently short as to avoid the presence of high currents, thus avoiding the need of exerting a high thermal stress on the internal power components for an excessively long period.

When signal Vc indicates a desired high light intensity, a very rapid heating of the lamp(s) L takes place, and therefore a short time interval (for example a few tens of milliseconds) is sufficient to enable the distinction of a condition of actual overload or short circuit from a cold lamp operation.

The related detection operation, i.e. the identification of the actual overload or short circuit condition, can therefore be performed for example by module S1, according to any suitable known solution, e.g. the solution described in WO-A-2009/122232 (PCT/IB/2008/000801).

The diagram of Figure 2 shows the features of possible embodiments of blocks S4 and S2 in greater detail.

Specifically, referring to module S4, the network comprising capacitor Cd and resistive divider R1, R2 decouples the direct component of signal Vp representative of the load, and offsets it in width towards an acceptable value. The network comprising resistor Rc, diode Db, resistor Rb and capacitor Cb is a quasi-peak detector adapted to supply a direct voltage to an emitter tracker comprising transistor T3 and resistor Re, used to separate the input and output impedances.

The higher the input ripple width, the higher the voltage at the ends of capacitor C.

Figure 2 also shows a possible embodiment of the start-stop module, adapted to be driven by microcontroller S1 through two signals, respectively denoted by P1 and P2.

Drive signal P1 is a very short pulse, used to trigger (energise) the half-bridge comprising transistors T1 and T2, by acting on the base of transistor T2 and by discharging a capacitor C6 through a resistor R6. This action is performed after a time interval following each zero crossing of the current, in the case of alternate current. In this way, in addition, the dimming function is performed.

Capacitor C6 is connected to the direct voltage Vc supply through a resistor Rs. Resistor R6 is connected to the collector of transistor T6, the emitter of which is in turn connected to the base of transistor T2, with a resistor Rb6 interposed between the base and the emitter of transistor T6. The same base of transistor T6 receives signal P1 through a resistor R7. Because the emitter of transistor T6 turns to negative during the half-bridge normal operation, output P1 is kept floating (according to a free state configuration) so as to avoid the undesired energizing of transistor T6, which would otherwise disturb the half-bridge normal oscillation.

Drive signal P2 is applied via a resistor R5 to the base of a transistor T5, the collector of which is in turn connected to the base of transistor T2 and has a further resistor RB5 connected between the base of transistor T5 and ground G, to which the emitter of transistor T5 is connected. Drive signal P2 is used to stop the half-bridge in the case of a dimming being directly supplied from the mains, or when an anomalous condition is detected.

The described solution can be referred, for example, to the previously described solutions in the Patent Applications for industrial invention TO2009A00255 and TO2009A00476.

Of course, without prejudice to the underlying principle of the invention, the details and the embodiments may vary, even appreciably, with respect to what has been described by way of example only, without departing from the scope of the invention as defined by the claims that follow.

**Claims**

1. A method of detecting anomalous operating conditions in an electrical circuit (10) for supplying power to at least one light source (L) having a filament with a light intensity level selectively variable in a range between a minimum value and a maximum value, including:

    - detecting (S4, S1) the output power of said power supply circuit (10) reaching an upper threshold value,
    - upon said threshold value being reached, controlling (S1, S2) the power supply circuit (10) in a burst mode including an alternate sequence of active intervals, where the circuit (10) operates to energize said at least one light source (L) so as to heat the filament thereof, and passive intervals, and
    - selectively varying the duration of said active intervals in a duration range between a minimum duration and a maximum duration in a manner complementary to said light intensity level, whereby said active intervals have minimum duration when said light intensity level is at said maximum value and maximum duration when said light intensity level is at said minimum value.

2. The method of claim 1, including selectively varying the duration of said active intervals according to a relationship of the type:

$$\mathrm{Ton}(\mathrm{Vc}) = \mathrm{Ton}_{max} - \mathrm{F}(\mathrm{Vc})$$

where:

    - Ton is the duration of said active intervals,
    - $\mathrm{Ton}_{max}$ is the maximum duration of said active intervals,
    - Vc is a signal representative of said light intensity level, and
    - F(Vc) is a positive function having a zero value when said light intensity value is at said minimum level.

3. The method of claim 1 or claim 2, including selecting the minimum duration of said active intervals at a value of a few tens of milliseconds.

4. The method of any of the previous claims, including providing in said circuit (10) an oscillating half-bridge including two electronic switches (T1, T2) to be alternatively turned on and off to cause current to flow in the primary winding of a transformer (TR) to feed said at least one lighting source via the secondary winding of said transformer, said oscillating half-bridge including a half bridge arrangement of diodes (D1, D2) having coupled therewith respective decoupling capacitors (C1, C2), the method including detecting the output power of said circuit (10) by detecting a ripple at the intermediate connection point of said decoupling capacitors (C1, C2).

5. An electrical circuit (10) for supplying power to at least one light source (L) having a filament with a light intensity level selectively variable in a range between a minimum value and a maximum value, including:

    - a detection module (S4) to detect the output power of said power supply circuit (10),
    - a control module (S1), connected (14) to said detection module (S4) to detect the output power of said power supply circuit (10) reaching an upper threshold value,
    - a drive module (S2) operable under the control of said control module (S1) to operate said circuit (10) upon said threshold value being reached, in a burst mode including an alternate sequence of active intervals, where the circuit (10) operates to energize said at least one light source (L) so as to heat the filament thereof, and passive intervals, and

- said control module (S1) configured to selectively vary the duration of said active intervals in a duration range between a minimum duration and a maximum duration in a manner complementary to said light intensity level, whereby said active intervals have minimum duration when said light intensity level is at said maximum value and maximum duration when said light intensity level is at said minimum value.

6. The circuit of claim 5, wherein said control module (S1) is configured for selectively varying the duration of said active intervals according to a relationship of the type:

$$Ton(Vc) = Ton_{max} - F(Vc)$$

where:

- Ton is the duration of said active intervals,
- $Ton_{max}$ is the maximum duration of said active intervals
- Vc is a signal representative of said light intensity level, and
- F(Vc) is a positive function having a zero value when said light intensity value is at said minimum level.

7. The circuit of claim 5 or claim 6, wherein said control module (S1) is configured to adjust the minimum duration of said active intervals at a value of a few tens of milliseconds.

8. The circuit of any of claims 5 to 7, including an oscillating half-bridge including two electronic switches (T1, T2) to be alternatively turned on and off to cause current to flow in the primary winding of a transformer (TR) to feed said at least one lighting source via the secondary winding of said transformer, said oscillating half-bridge including a half bridge arrangement of diodes (D1, D2) having coupled therewith respective decoupling capacitors (C1, C2), said detection module (S4) to detect the output power of said circuit (10) by detecting a ripple at the intermediate connection point of said decoupling capacitors (C1, C2).

9. A computer program product loadable in the memory of a computer and including software code portions to perform the steps of the method of any of claims 1 to 4 when the product is run on a computer.

FIG. 1

# FIG. 2

**EUROPEAN SEARCH REPORT**

Application Number

EP 10 19 0685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 629 607 A (CALLAHAN MICHAEL [US] ET AL) 13 May 1997 (1997-05-13) * figures 1-3 * * column 4, line 17 - line 26 * * column 6, line 40 - column 12, line 36 * * column 24, line 19 - column 27, line 20 * * AC-switch based dimmer with current limit * ----- | 1-9 | INV. H05B39/04 ADD. H05B37/03 |
| X | WO 00/79681 A1 (LUTRON ELECTRONICS CO [US]) 28 December 2000 (2000-12-28) * abstract; figures 1-2 * * page 4, line 20 - page 5, line 13; claims 1, 12, 26-33 * * page 6, line 2 * * page 9, line 29 - page 10, line 32 * * A light source control system using an ac-switch limiting the delivered power when overload is detected * ----- | 1-9 | |
| A | WO 2009/122232 A1 (OSRAM GMBH [DE]; OSRAM S P A SOCIETA RIUNITE OS [IT]; FACCIN MARCO [IT] 8 October 2009 (2009-10-08) * cut off protection circuit for an AC-switch based dimmer * ----- | 1-9 | TECHNICAL FIELDS SEARCHED (IPC) H05B |

The present search report has been drawn up for all claims

| Place of search | Date of completion of the search | Examiner |
|---|---|---|
| Munich | 2 May 2011 | Maicas, Jesús |

EPO FORM 1503 03.82 (P04C01)

## ANNEX TO THE EUROPEAN SEARCH REPORT
## ON EUROPEAN PATENT APPLICATION NO.

EP 10 19 0685

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2011

| Patent document cited in search report | | Publication date | Patent family member(s) | | Publication date |
|---|---|---|---|---|---|
| US 5629607 | A | 13-05-1997 | NONE | | |
| WO 0079681 | A1 | 28-12-2000 | AT | 249695 T | 15-09-2003 |
| | | | AT | 281023 T | 15-11-2004 |
| | | | AT | 286322 T | 15-01-2005 |
| | | | AU | 5609400 A | 09-01-2001 |
| | | | CA | 2374381 A1 | 28-12-2000 |
| | | | DE | 60005186 D1 | 16-10-2003 |
| | | | DE | 60005186 T2 | 17-06-2004 |
| | | | DE | 60015401 D1 | 02-12-2004 |
| | | | DE | 60015401 T2 | 20-10-2005 |
| | | | DE | 60017203 D1 | 03-02-2005 |
| | | | DE | 60017203 T2 | 06-04-2006 |
| | | | EP | 1188240 A1 | 20-03-2002 |
| | | | ES | 2206258 T3 | 16-05-2004 |
| | | | ES | 2231647 T3 | 16-05-2005 |
| | | | ES | 2236439 T3 | 16-07-2005 |
| | | | JP | 4159286 B2 | 01-10-2008 |
| | | | JP | 2003503003 T | 21-01-2003 |
| | | | US | 6347028 B1 | 12-02-2002 |
| WO 2009122232 | A1 | 08-10-2009 | CN | 101983541 A | 02-03-2011 |
| | | | EP | 2263422 A1 | 22-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009122232 A

- US IB2008000801 W